# EUROPEAN PATENT SPECIFICATION

(11) **EP 3 470 135 B1**
(45) Date of publication and mention of the grant of the patent: **08.04.2020**
(21) Application number: 17196355.6
(22) Date of filing: 13.10.2017
(51) Int. Cl.: B01J 13/16, B41M 5/327, C08G 18/32

(54) **A COMPOSITION COMPRISING SOLVENT AND HEAT RESISTANT CAPSULES**
ZUSAMMENSETZUNG MIT LÖSUNGSMITTEL UND HITZEBESTÄNDIGEN KAPSELN
COMPOSITION COMPRENANT UN SOLVANT ET DES CAPSULES RÉSISTANT À LA CHALEUR

(43) Date of publication of application: 17.04.2019
(73) Proprietor: AGFA NV, 2640 Mortsel (BE); Agfa-Gevaert, 2640 Mortsel (BE)
(72) Inventor: GOETHALS, Fabienne, 2640 Mortsel (BE); CURINCKX, Freya, 2640 Mortsel (BE); LOCCUFIER, Johan, 2640 Mortsel (BE)
(74) Representative: Viaene, Kris

(56) References cited:
- WO-A1-2015/158649
- WO-A1-2016/144798
- JP-A- 2017 094 313

## Description

### Technical field of the Invention

The present invention relates to capsules, and to laser markable compositions containing such capsules.

### Background art for the invention

Encapsulation of water-insoluble components has many applications in agricultural, pharmaceutical, cosmetic, and graphic industries. The reason for encapsulation is usual to be found in making a compartment to either protect the encapsulant from the matrix or the chemical environment. Other applications aim at the controlled or triggered release of the encapsulated compound. In every case, the capsule shell plays a key role.

Laser marking, i.e. providing information on for example packaging or a security document by means of a laser, is gaining interest as an answer to an increasing demand for personalization, mass customization, security, traceability and anti-counterfeiting.

A multicolour laser marking technology makes use of leuco dyes, as disclosed in for example EP-A 2648920 (Agfa Gevaert). A leuco dye is a substantially colourless compound, which may react with a developing agent to form a coloured dye.

In water based laser markable compositions, encapsulation technologies may be used to separate the leuco dyes and the developing agents before laser exposure, as disclosed in WO2016/184881 (Agfa Gevaert).

Upon infrared laser exposure, a rupture of the capsules may result in a reaction between the leuco dyes and the developing agents, which then triggers colour formation.

Capsules with a core-shell structure, of which the shell has been generated from a reaction of a multifunctional isocyanate with a multifunctional amine, are well known. For example, WO2013/109268 (FujiFilm Hunt Chemicals) and US6127314 (Fuji Photo Film) describe the preparation of capsules containing leuco dyes using interfacial polymerization between a multifunctional isocyanate and a multifunctional amine.

WO2014/124052 (FujiFilm Hunt Chemicals) discloses capsules containing leuco dyes prepared by interfacial polymerization using an isophorone diisocyanate.

Such capsules have an improved humidity dependency of their thermal response. JP2017094313 A discloses a microcapsule composition wherein the microcapsule comprises a shell comprising a polymer of a trifunctional polyisocyanate and adipic acid dihydrazide. Laser marking is not disclosed. Aromatic hydrazides are not disclosed. US2017029639 A1 discloses aqueous resin-based inkjet inks comprising core-shell microcapsules. Shells comprising two components including blocked isocyanates and a hydrazine are suggested.

A problem with such capsules is often their limited temperature and solvent resistance.

A poor solvent resistance may limit the compositions wherein the capsules may be used. A minor amount of an organic solvent in the composition may result in a rupture of the capsules. When the encapsulant is a leuco dye, such a rupture may result in unwanted colour formation.

For example in inkjet applications, a co-solvent is often added to adjust surface tension and/or viscosity of the ink. Also in water-based formulations, water-soluble organic solvents such as ethylene glycol, butyl glycol, butanol, hexanol, triethylene glycol, or glycerol are often added to optimize their rheological properties.

### Summary of the invention

It is an object of the present invention to provide compositions comprising capsules having an improved solvent and heat resistance and to compositions comprising such capsules.

This object is realised with compositions as defined in claim 1.

It is another object of the invention to provide laser markable articles comprising such capsules and to provide laser markable articles made therewith.

Disclosed but not claimed is the provision of a method to prepare such capsules.

Further objects of the invention will become apparent from the description hereinafter.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2Dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -Cl, -Br, -I, -OH, -SH, -CN and -NO₂.

### Capsules

The capsules used in the invention are also referred to as microcapsules.

The particle size of the capsules is preferably between 50 and 2000 nm, more preferably between 100 and 1000 nm, most preferably between 250 and 750 nm.

Many methods are known to prepare microcapsules, such as described in "Microspheres, microcapsules & liposomes", volume 1; preparation & chemical applications, volume 2; medical & biotechnological applications, edited by Reza Arshady (ISBN 0953218716).

Common methods for making microcapsules include spray-drying, solvent evaporation, mini-emulsion, or interfacial polymerization.

To guarantee the formation of a core-shell material, interfacial polymerization is used to form capsules according to the present invention. This technique is forming a capsule shell at the oil/water interface. By growing a polymer around the encapsulant, a higher encapsulation efficiency may be obtained.

An overview of interfacial polymerization techniques is disclosed in Salaon, F. (2013) "Microencapsulation by Interfacial Polymerization", in Encapsulation Nanotechnologies (ed V. Mittal), John Wiley & Sons, Inc., Hoboken, NJ, USA.

In general, interfacial polymerization requires the dispersion of an oleophilic phase in an aqueous continuous phase or vice versa. Each of the phases contains at least one dissolved monomer (a first shell component) that is capable of reacting with another monomer (a second shell component) dissolved in the other phase. Upon polymerization, a polymer is formed that is insoluble in both the aqueous and the oleophilic phase. As a result, the formed polymer has a tendency to precipitate at the interface of the oleophilic and aqueous phase, hereby forming a shell around the dispersed phase, which grows upon further polymerization.

The capsules according to the present invention are preferably prepared from an oleophilic dispersion in an aqueous continuous phase.

A first shell component used to prepare the capsules according to the present invention is a polyisocyanate compound as described below. The second shell component is a polyhydrazide compound as described below.

The capsules according to the present invention are thus prepared by interfacial polymerization of a polyisocyanate and a polyhydrazide compound as described below, thereby forming a polysemicarbazide polymeric shell.

The polyisocyanate is preferably added to the oleophilic phase while the hydrazide compound is added to the other phase.

### Polyhydrazides

A polysemicarbazide shell is the result of an interfacial polymerization between the polyisocyanate compound and a polyhydrazide.

The polyhydrazide compound has a chemical structure according to Formula I, 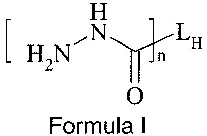 wherein
L_{H} is a substituted or unsubstituted arylene group group, and
n is an integer ranging from 2 to 4.

Disclosed but not claimed is L_{H} selected from a substituted or unsubstituted (hetero)arylene group, a substituted or unsubstituted alkyleneoxide group, a substituted or unsubstituted (hetero)cyclic alkyleneoxide group, and a substituted or unsubstituted aralkylene group.

According to a particular preferred embodiment, L_{H} is an optionally substituted arylene group, more preferably an optionally substituted phenylene group.

A particularly preferred polyhydrazide is a dihydrazide (n = 2).

Dihydrazides are typically prepared by reacting a dicarboxylic acid with hydrazine, as shown below. 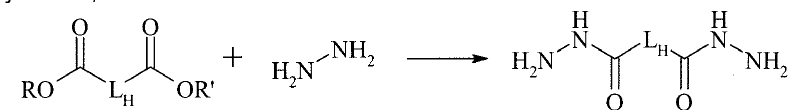 wherein
R and R' are independently selected from the group consisting of a substituted or unsubstituted alkyl group and a substituted or unsubstituted aryl group.
R and R' may be the same.

Examples of polyhydrazides are shown in Table 1.

**Table 1**

| | |
|---|---|
| 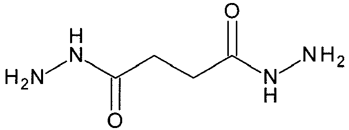 | HYDRAZ-01 |
| 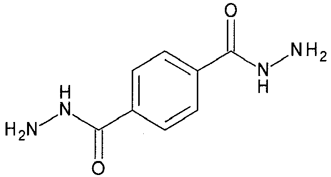 | HYDRAZ-02 |
| 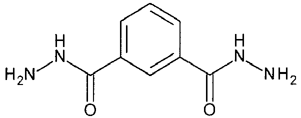 | HYDRAZ-03 |
| 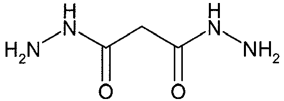 | HYDRAZ-04 |
| 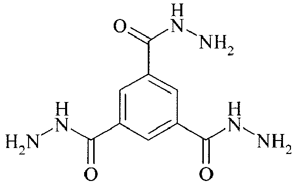 | HYDRAZ-05 |
| 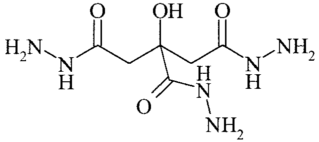 | HYDRAZ-06 |
| 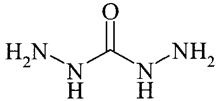 | HYDRAZ-07 |
| 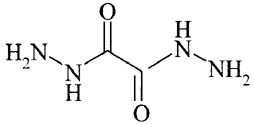 | HYDRAZ-08 |

### Polyisocyanates

The polyisocyanates used to prepare the capsules are aliphatic polyisocyanates, aromatic polyisocyanates or mixtures thereof.

A polyisocyanate comprises at least two isocyanate functional groups, for example two, three, four or six isocyanate functional groups. A preferred polyisocyanate comprises three isocyanate functional groups.

In an aromatic polyisocyanate the isocyanate groups are directly attached to an aromatic moiety, such as a phenyl, a toluyl, a napthyl or a diphenyl moiety.

The most commonly used aromatic diisocyanates are toluene diisocyanate (TDI) and methylene diphenyl diisocyanate (MDI).

Preferred aromatic polyisocyanates are biuret, isocyanurate and trimethylol propane adducts of diisocyanates comprising one of the above-cited aromatic moieties.

Particular preferred aromatic polyisocyanates are a trimethylol propane-adduct of toluene diisocyanate (commercially available from Bayer under the tradename Desmodur L75) and an isocyanurate derivative of toluene diisocyanate (commercially available from Bayer under the tradename Desmodur RC).

The most important aliphatic and cycloaliphatic isocyanates are 1,6-hexamethylene diisocyanate (HDI), 1-isocyanato-3-isocyanatomethyl-3,5,5-trimethylcyclohexane (isophorone diisocyanate, IPDI), xylylene diisocyanate (XDI), hydrogenated xylylene diisocyanate (H6XDI) and 4,4'-diisocyanato dicyclohexylmethane, (H₁₂MDI or hydrogenated MDI).

Preferred aliphatic polyisocyanates are a trimethylol propane-adduct of xylylene diisocyanate (commercially available from Mitsui Chemicals under the tradename Takenate D-110N) and an isocyanurate derivative of xylylene-diisocyanate, the isocyanurate derivative of xylylene-diisocyanate being particularly preferred.

The isocyanurate derivative of xylylenediisocyanate is a trimer of xylylenediisocyanate and is produced by subjecting xylylenediisocyanate to an isocyanurate-forming reaction in the presence of an isocyanurate-forming catalyst.

Xylylenediisocyanate includes the structural isomers 1,2-xylylenediisocyanate (o-xylylenediisocyanate (o-XDI)), 1,3-xylylenediisocyanate (m-xylylene-diisocyanate (m-XDI)), and 1,4-xylylenediisocyanate (p-xylylenediisocyanate (p-XDI)).

These xylylenediisocyanates may be used singly or in combination of two or more. For the xylylenediisocyanate, preferably 1,3-xylylenediisocyanate and 1,4-xylylenediisocyanate, more preferably 1,3-xylylenediisocyanate is used.

Isocyanurate derivatives of xylylenediisocyanates, and their preparation methods are disclosed in EP-A 3115386 (Mitsui Chemicals), paragraphs [0015] - [0090] and EP-A 3115430 (Mitsui Chemicals), paragraphs [0019]-[0044]).

Preferred aliphatic polyisocyanates are a trimer of hexamethylene diisocyanate, a trimer of isophorone diisocyanate, a trimethylol propane adduct of hexamethylene diisocyanate (available from Mitsui Chemicals) or a biuret of hexamethylene diisocyanate (commercially available from Bayer under the tradename Desmodur N 100).

### Preparation of the capsules

In general, interfacial polymerization requires the dispersion of an oleophilic phase in an aqueous continuous phase or vice versa. Each of the phases contains at least one dissolved monomer (a first shell component), for example the polyisoyanate, that is capable of reacting with another monomer (a second shell component), for example the polyhydrazide, dissolved in the other phase. Upon polymerization, a polymer is formed that is insoluble in both the aqueous and the oleophilic phase. As a result, the formed polymer has a tendency to precipitate at the interface of the oleophilic and aqueous phase, hereby forming a shell around the dispersed phase, which grows upon further polymerization.

The capsules according to the present invention are preferably prepared from an oleophilic dispersion in an aqueous continuous phase.

In a preferred embodiment, a water immiscible solvent is used in the dispersion step, which is removed by solvent stripping before or after the shell formation. In a particularly preferred embodiment, the water immiscible solvent has a boiling point below 100°C at normal pressure. Esters are particularly preferred as water immiscible solvent. A preferred organic solvent is ethyl acetate, because it also has a low flammability hazard compared to other organic solvents.

A water immiscible solvent is an organic solvent having low miscibility in water. Low miscibility is defined as any water solvent combination forming a two phase system at 20°C when mixed in a one over one volume ratio.

A preferred method for preparing a dispersion of capsules according to the present invention includes the following steps:
a) preparing a non-aqueous solution of a polyisocyanate described above and optionally a water immiscible organic solvent having a lower boiling
b) dispersing the non-aqueous solution under high shear in an aqueous solution;
c) optionally stripping the water immiscible organic solvent from the mixture of the aqueous solution and the non-aqueous solution;
d) adding a polyhydrazide to the aqueous solution, and
e) preparing the polymeric shell around the leuco dye by interfacial polymerization of the polyisocyanate and the polyhydrazide.

The polyhydrazide may already be added to the aqueous solution used in step b).

Preferably, the amount of the poyisocyanate and of the polyhydrazide results in an ratio of hydrazide groups to isocyanate group of 1 to 1.

The encapsulant is preferably added in step a) to the non-aqueous solution.

For preparing a laser markable composition, a leuco dye is added in step (a) to the non-aqueous solution resulting in capsules wherein the leuco dye is located in the core of the capsule.

The polymerization in step e) is preferably carried out at elevated temperatures, more preferably at temperature above 50°C, most preferably at a temperature above 75°C, particularly preferred at a temperature above 90°C.

It has been observed that at higher temperatures, capsules are obtained that have an improved solvent resistance and mechanical strength.

The aqueous solution preferably comprises a watersoluble polymer as a protective colloid. The water-soluble polymer may act as a dispersing medium for achieving homogeneous dispersion easily and stabilizing the emulsified solution.

The water-soluble may be selected from known anionic polymers, nonionic polymers and amphoteric polymers.

The water-soluble polymer has a solubility in water of preferably 5% or more at a temperature at which the emulsification is conducted.

Specific examples of the water-soluble polymer include polyvinyl alcohol and modified products thereof, polyacrylic amide and derivatives thereof, ethylenevinyl acetate copolymer; styrene-maleic anhydride copolymer; ethylene-maleic anhydride copolymer; isobutylene-maleic anhydride copolymer; polyvinyl pyrrolidone; ethylene- acrylic acid copolymer; vinyl acetate-acrylic acid copolymer; cellulose derivatives such as carboxymethylcellulose and methylcellulose; casein; gelatin; starch derivatives; gum arabic; and sodium alginate.

Among these polymers, polyvinyl alcohol and its derivatives are preferable.

A surfactant may be added to at least one of the non-aqueous and the aqueous phase to achieve more homogenous and stable dispersions. The surfactant is preferably added to the aqueous phase.

A preferred surfactant added to the aqueous phase is a surfactant, which does not cause precipitation or aggregation caused by a reaction with the protective colloid described above and are therefore selected from anionic and nonionic surfactants.

Preferred surfactants include sodium alkylbenzenesulfonate, sodium alkylsulfate, sodium dioctyl sulfosuccinate, polyalkylene glycol (such as polyoxyethylene nonyl phenyl ether), acetylene glycol and the like.

In order to make microcapsule walls having excellent substance permeability and colour-formability even at a lower temperature, it is preferred to use a plasticizer suitable for the polymer used as the wall material.

The plasticizer preferably has a melting point from about 50°C to about 120°C. It is particularly preferred to select a plasticizer, which has such a melting point and takes a solid form at room temperature.

For example, when the wall material is polyurea or polyurethane, it is preferable to use a hydroxy compound, a carbamic acid ester compound, an aromatic alkoxy compound, an organic sulfonamide compound, an aliphatic amide compound, an arylamide compound or the like, as a plasticizer.

When the oil phase is prepared, it might be advantageous to use an organic solvent having a boiling point of from 100 to 300 °C as a hydrophobic organic solvent in which the leuco dye may be dissolved for forming the cores of the capsules.

Specific examples thereof include esters, dimethylnaphthalene, diethylnaphthalene, diisopropylnaphthalene, dimethylbiphenyl, diisopropylbiphenyl, diisobutylbiphenyl, 1-methyl-1-dimethylphenyl-2-phenylmethane, 1-ethyl-1-dimethylphenyl-1-phenylmethane, 1-propyl-1-dimethylphenyl-1-phenylmethane, triallylmethane (such as tritoluylmethane and toluyildiphenyimethane), terphenyl compounds, alkyl compounds, alkylated diphenyl ether compounds (such as propyldiphenyl ether), hydrogenated terphenyl compounds (such as hexahydroterphenyi), and diphenyl ether.

Among these examples, esters are particularly preferable from the viewpoints of the emulsification stability of the emulsion.

Examples of the esters include phosphate esters such as triphenyl phosphate, tricresyl phosphate, butyl phosphate, octyl phosphate and cresylphenyl phosphate; phthalic esters such as dibutyl phthalate, 2-ethylhexyl phthalate, ethyl phthalate, octyl phthalate, and butylbenzyl phthalate; dioctyl tetrahydrophthalate; benzoic esters such as ethyl benzoate, propyl benzoate, butyl benzoate, isopentyl benzoate, and benzyl benzoate; abietic esters such as ethyl abietate, and benzyl abietate; dioctyl adipate; isodecyl succinate; diocyl azelate; oxalic esters such as dibutyl oxalate and dipentyl oxalate; diethyl malonate; maleic esters such as dimethyl maleate, diethyl maleate, and dibutyl maleate; tributyl citrate; sorbic esters such as methyl sorbate, ethyl sorbate and butyl sorbate; sebacic esters such as dibutyl sebacate, and dioctyl sebacate; ethylene glycol esters such as formic monoester and diester, butyric monoester and diester, lauric monoester and diester, palmitic monoester and diester, stearic monoester and diester, and oleic monoester and diester; triacetin; diethyl carbonate; diphenyl carbonate; ethylene carbonate; propylene carbonate; boric esters such as tributyl borate and tripentyl borate.

Among them, it is preferable to use, as the organic solvent, tricresyl phosphate alone or in combination with other solvent(s) since the stability of the emulsion becomes most satisfactory.

The above-mentioned oils may be used in any combination thereof, or the oil(s) may be used together with an oil other than the above-mentioned oils.

Self-dispersible capsules wherein a dispersing group is covalently bound the polymeric shell, as described WO2015/158649 (Agfa Graphics), paragraphs [0037] to [0057], and wherein the shell is prepared with a polyisocyanate as described above, may also be used in the present disclosure.

### Encapsulant

In principle any compound may be encapsulated.

For example, the encapsulant may be a blocked isocyanate as disclosed in WO2015/158649 (Agfa Graphics), paragraphs [0060] to [0066].

When used for laser markable composition, the encapsulant is preferably a leuco dye.

An optothermal converting agent used in a laser markable composition may also be encapsulated, together with the leuco dye in the same capsules or in separate capules.

An encapsulated optothermal converting agent may be used in any application, for example to improve the stability of the optothemal converting agent in that application.

The capsules may also be used in perfuming compositions, for example encapsulating volatile compounds like perfumes, wherein the volatile compound is released in a controlled manner, as disclosed in for example WO2013/068255 (FIRMENICH).

### Laser markable composition

The laser markable composition preferably comprises a leuco dye encapsulated in capsules as described above.

Preferred laser markable compositions further comprise an optothermal converting agent and a developing agent. The composition may further comprise other ingredients such as an acid scavenger and a UV absorber.

The laser markable composition may also comprise a dye or pigment that enhances the contrast between the laser marked image and the background colour.

In a particular preferred embodiment, the laser markable composition comprises a white pigment.

### Leuco dye

A leuco dye is a substantially colourless compound, which may form a coloured dye upon an inter- or intra-molecular reaction. The inter- or intra-molecular reaction may be triggered by heat, preferably heat formed during exposure with an IR laser.

Examples of leuco dyes are disclosed in WO2015/165854 (Agfa Gevaert), paragraph [069] to [093].

### Optothermal converting agent

An optothermal converting agent generates heat upon absorption of radiation.

The optothermal converting agent preferably generates heat upon absorption of infrared radiation, more preferably near infrared radiation. Near infrared radiation has a wavelength between 750 and 2500 nm.

Optothermal converting agents may be an infrared absorbing dye, an infrared absorbing pigment, or a combination thereof.

The optothermal converting agent is preferably an infrared absorbing dye.

The optothermal converting agent may be added to the laser markable composition comprising the encapsulated leuco dye or the opthermal converting agent may be encapsulated together with the leuco dye.

### Infrared radiation absorbing (IR) pigment

Suitable examples of infrared absorbing pigments include but are not limited to carbon black such as acetylene black, channel black, furnace black, lamp black, and thermal black; oxides, hydroxides, sulfides, sulfates and phosphates of metals such as copper, bismuth, iron, nickel, tin, zinc, manganese, zirconium, tungsten, lanthanum, and antimony including lanthane hexaboride, indium tin oxide (ITO) and antimony tin oxide, titanium black and black iron oxide.

A preferred infrared absorbing pigment is carbon black.

The particle size of the pigment is preferably from 0.01 to 5 µm, more preferably from 0.05 to 1µm.

The amount of the infrared absorbing pigment is between 10 and 1000 ppm, preferably between 25 and 750 ppm, more preferably between 50 and 500 ppm, most preferably between 100 and 250 ppm, all relative to the total dry weight of a laser markable layer. An amount of infrared absorbing pigment above 1000 ppm results in a too high background density of the laser markable article.

Aqueous dispersions of carbon black are preferably used in the present invention. Examples of such aqueous carbon black dispersions are CAB-O-JET® 200 and 300 from CABOT.

The IR dyes disclosed below may also be used as IR pigments, for example cyanine pigment, merocyanine pigment, etc.

Other suitable Infrared radiation absorbing pigments are disclosed in WO2005/068207, WO2007/141522, WO2009/059900, and WO2015/015200.

### Infrared radiation absorbing (IR) dye

Infrared absorbing dyes are preferred for their narrow absorption spectra, compared to pigments, enabling multicolour images to be formed.

In principle any IR dye may be used, for example the IR dyes disclosed in "Near-Infrared Dyes for High Technology Applications" (ISBN 978-0-7923-5101-6).

An advantage of using IR dyes is that the absorption spectrum of an IR dye tends to be narrower than that of an IR pigment. This allows the production of a multicoloured image when a plurality of laser markable layers, each laser markable layer containing different IR dyes and leuco dyes, are used. The IR dyes having a different maximum absorption wavelength can then be adressed by IR lasers with corresponding emission wavelengths causing colour formation only in the laser markable layer of the adressed IR dye. Such multicolour articles have been disclosed in for example US 4720449 (Polaroid), EP-A 2719540 (Agfa Gevaert) and EP-A 2719541 (Agfa Gevaert).

Preferred IR dyes are polymethine dyes due to their low absorption in the visible region and their selectivity, i.e. narrow absorption peak in the infrared region. Particular preferred polymethine IR dyes are cyanine IR dyes.

Preferred IR having an absorption maximum of more than 1100 nm are those disclosed in EP-A 2722367, paragraphs [0044] to [0083] and WO2015/165854, paragraphs [0040] to [0051].

IR dyes having an absorption maximum between 1000 nm and 1100 nm are preferably selected from the group consisting of quinoline dyes, indolenine dyes, especially a benzo[cd]indoline dye. A particularly preferred IR dye is 5-[2,5-bis[2-[1-(1-methylbutyl)-benz[cd]indol-2(1H)-ylidene]ethylidene]-cyclopentylidene]-1-butyl-3-(2-methoxy-1-methylethyl)-2,4,6(1H,3H,5H)-pyrimidinetrione (CASRN 223717-84-8) represented by the Formula IR-1, or the IR dye represented by Formula IR-2:

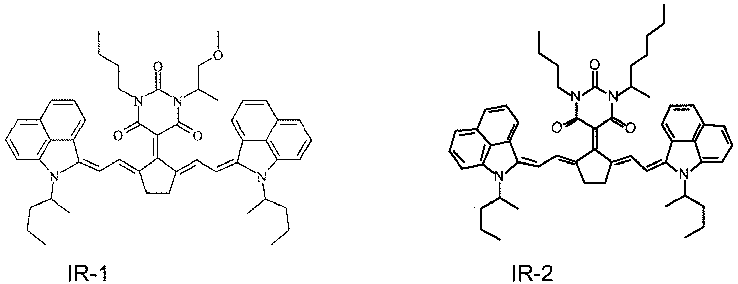

Both IR dyes IR-1 and IR-2 have an absorption maximum λₘₐₓ around 1052 nm making them very suitable for a Nd-YAG laser having an emission wavelength of 1064 nm.

The amount of IR dye in a dried laser markable layer is preferably between 0.01 and 1, more preferably between 0.025 and 0.5 wt % relative to the total dry weight of a laser markable layer. Enough IR dye has to be present to ensure sufficient colour density formation upon exposure to IR radiation. However, using too much IR dye may result in unwanted background colouration of the laser markable materials.

A combination of two, three or more IR dyes may be used in the laser markable layer. Such a combination of IR dyes may be used to optimize the absorption spectrum of the laser markable layer. Also, a mixture of IR dyes may improve the solubility of the IR dyes in the laser markable composition wherewith the laser markable layer is prepared.

### Developing agent

A developing agent is capable of reacting with a colourless leuco dye resulting in the formation of a coloured dye.

The developing agent is preferably a water soluble or water dispersible developing agent.

Various electron accepting substances may be used as developing agent in the present invention. Examples thereof include phenolic compounds, organic or inorganic acidic compounds and esters or salts thereof.

Examples of developing agents that may be used are disclosed in WO2014/124052 (FujiFilm Hunt Chemicals), paragraph [0069] to [0073].

Preferred developing agents are metal salts of a carboxylic acid, as dislosed in WO2006/067073 (Datalase), page 3, line 4 to page 5, line 31.

A preferred colour developing agent is a metal salt of salicylic acid, for example zinc salicylate. A particularly preferred colour developing agent is zinc 3,5-bis(α-methylbenzyl) salicylate.

A developing agent precursor, i.e. a compound, which is capable of releasing a developing agent upon exposure to heat or IR radiation, may also be used. An advantage of such a developing agent precursor may be a better stability towards the environment.

Preferred developing agent precursors are disclosed in WO2016/184881, paragraph [086] to [0123].

### UV absorbers

The laser markable composition may also comprise a UV-absorber. The UV-absorber is however preferably present in a protective layer, provided on top of the printed laser markable image.

Examples of suitable UV-absorbers include 2-hydroxyphenyl-benzophenones (BP) such as Chimassorb™ 81 and Chimassorb™ 90 from BASF; 2-(2-hydroxyphenyl)-benzotriazoles (BTZ) such as Tinuvin™ 109, Tinuvin™ 1130, Tinuvin™ 171, Tinuvin™ 326, Tinuvin™ 328, Tinuvin™ 384-2, Tinuvin™ 99-2, Tinuvin™ 900, Tinuvin™ 928, Tinuvin™ Carboprotect™^{,}Tinuvin™ 360, Tinuvin™ 1130, Tinuvin™ 327, Tinuvin™ 350, Tinuvin™ 234 from BASF, Mixxim™ BB/100 from FAIRMOUNT, Chiguard 5530 from Chitec; 2-hydroxy-phenyl-s-triazines (HPT) such as Tinuvin™ 460, Tinuvin™ 400, Tinuvin™ 405, Tinuvin™ 477, Tinuvin™ 479, Tinuvin™ 1577 ED, Tinuvin™ 1600 from BASF, 2-(2,4-dihydroxyphenyl)-4,6-bis-(2,4-dimethylphenyl)-s-triazine (CASRN1668-53-7) from Capot Chemical Ltd and 4-[4,6-bis(2-methyl-phenoxy)-1,3,5-triazin-2-yl]-1,3-benzenediol (CASRN13413-61-1); titanium dioxide such as Solasorb 100F from from Croda Chemicals; zink oxide such as Solasorb 200F from Croda Chemicals; benzoxazines such as Cyasorb UV-3638 F, CYASORB™ UV-1164 from CYTEC; and oxamides such as Sanduvor VSU from Clariant.

Preferred UV absorbers have in the wavelength region between 300 and 400 nm a maximum absorption above 330 nm, more preferably above 350 nm.

Particular preferred UV absorbers are hydroxyphenyl benzotriazoles and 2-hydroxyphenyl-s-triazines having a maximum absorption above 350 nm in the wavelength region 300 - 400 nm.

### Acid Scavenger

The laser markable composition may contain one or more acid scavengers.

Acid scavengers include organic or inorganic bases. Examples of the inorganic bases include hydroxides of alkali metals or alkaline earth metals; secondary or tertiary phosphates, borates, carbonates; quinolinates and metaborates of alkali metals or alkaline earth metals; a combination of zinc hydroxide or zinc oxide and a chelating agent (e.g., sodium picolinate); hydrotalcite such as Hycite 713 from Clariant; ammonium hydroxide; hydroxides of quaternary alkylammoniums; and hydroxides of other metals. Examples of the organic bases include aliphatic amines (e.g., trialkylamines, hydroxylamines and aliphatic polyamines); aromatic amines (e.g., N-alkyl-substituted aromatic amines, N-hydroxylalkyl-substituted aromatic amines and bis[p-(dialkylamino)phenyl]-methanes), heterocyclic amines, amidines, cyclic amidines, guanidines and cyclic guanidines.

Other preferred acid scavangers are HALS compounds. Example of suitable HALS include Tinuvin™ 292, Tinuvin™ 123, Tinuvin™ 1198, Tinuvin™ 1198 L, Tinuvin™ 144, Tinuvin™ 152, Tinuvin™ 292, Tinuvin™ 292 HP, Tinuvin™ 5100, Tinuvin™ 622 SF, Tinuvin™ 770 DF, Chimassorb™ 2020 FDL, Chimassorb™ 944 LD from BASF; Hostavin 3051, Hostavin 3050, Hostavin N 30, Hostavin N321, Hostavin N 845 PP, Hostavin PR 31 from Clariant.

Further examples of acid scavengers are salts of weak organic acids such as carboxylates (e.g. calcium stearate).

A preferred acid scavenger is an organic base, more preferably an amine. A particular preferred acid scavenger is an organic base having a pKb of less than 7.

### Laser markable Article

The laser markable article according to the present invention is prepared by applying the laser markable composition according to the present invention on a support.

The laser markable composition may be provided onto a support by co-extrusion or any conventional coating technique, such as dip coating, knife coating, extrusion coating, spin coating, spray coating, slide hopper coating and curtain coating.

The laser markable composition may also be provided onto a support by any printing method such as intaglio printing, screen printing, flexographic printing, offset printing, inkjet printing, gravure offset printing, etc. Using a printing method is preferred when only a part or several parts of a support has to be provided with a laser markable layer.

The laser markable article maybe selected from a packaging, a foil, a laminate, a security document, a label, a decorative object and an RFID tag.

### Support

The laser markable composition may be applied on any type of surface, for example a metallic support, a glass support, a polymeric support, or a paper support. The laser markable composition may also be applied on a textile surface.

The support may be provided with a primer to improve the adhesion between the support and the laser markable composition.

A primer containing a dye or a pigment, for example a white primer, may also be provided on the support, for example to improve the contrast of the laser marked image.

The support may be a paper support, such as plain paper or resin coated paper, e.g. polyethylene or polypropylene coated paper.

There is no real limitation on the type of paper and it includes newsprint paper, magazine paper, office paper, or wallpaper but also paper of higher grammage, usually referred to as paper boards, such as white lined chipboard, corrugated (fiber) board and packaging board.

Also, so-called synthetic papers, such as the Synaps™ synthetic papers from Agfa Gevaert, which are opaque polyethylene terephthalate sheets, may be used as support.

Suitable polymeric supports include cellulose acetate propionate or cellulose acetate butyrate, polyesters such as polyethylene terephthalate and polyethylene naphthalate, polyamides, polycarbonates, polyimides, polyolefins, polyvinylchlorides, polyvinylacetals, polyethers, polysulfonamides, polylactide (PLA) and polyimide.

A preferred polymeric support is a biaxially stretched polyethylene terephthalate foil (PET-C foil) due to its very high durability and resistance to scratches and chemical substances.

The manufacturing of PET-C foils and supports is well-known in the art of preparing suitable supports for silver halide photographic films. For example, GB 811066 (ICI) teaches a process to produce biaxially oriented polyethylene terephthalate foils and supports.

The polymeric support may be a single component extrudate or co-extrudate. Examples of suitable co-extrudates are PET/PETG and PET/PC.

There is no restriction on the shape of the support. It can be a flat sheet, such as a paper sheet or a polymeric film or it can be a three dimensional object like e.g. a plastic coffee cup.

The three dimensional object can also be a container like a bottle or a jerry-can for including e.g. oil, shampoo, insecticides, pesticides, solvents, paint thinner or other type of liquids.

The laser markable composition may also be applied on a so-called shrink foil. Such a foil shrinks tightly over whatever it is covering when heat is applied.

The most commonly used shrink foils are polyolefin foils, i.e. polyethylene or polypropylene foils. However, other shrink foils include PCV foils.

### Packaging

A preferred laser markable article is packaging.

Laser marking is typically used to add variable data, for example batch numbers, expiry dates, addressees, etc. on the packaging.

Preferably laser marking is carried out in-line in the packaging process.

The laser marked "image" on a packaging may comprises data, images, barcodes, QR codes, or a combination thereof.

An advantage of using laser marking in a packaging process is the ability to mark information through a wrapping foil, for example the flavour-protective foil used for cigarette packs. In such a way, variable data may be provided on the cigarette packs after the protective foil has already been provided.

Another preferred laser markable packaging is used for pharmaceutical packaging. For pharmaceutical packaging, track and trace requirements become more and more demanding to comply with the ever evolving legislation.

Another advantage of using laser marking instead of another printing technique, such as inkjet printing, is the absence of any chemicals in the marking process. Especially for pharmaceutical and food packaging, the absence of chemicals in the packaging line is a great advantage.

By selecting a proper leuco dye, or a mixture of leuco dyes, the package may be provided with data or images in any colour.

A preferred packaging is folded cardboard or corrugated cardboard laminated with paper. Such packaging is preferably used for cosmetics, pharmaceuticals, food or electronics.

Multiple colour, even full colour, images may be obtained when the packaging is provided with multiple laser markable compositions, each containing a different leuco dye and optothermal converting agent, as disclosed in EP-A2719540 (Agfa Gevaert) and EP-A 2719541 (Agfa Gevaert).

### Security Documents

The laser markable compositions may also be used to prepare security documents, such as for example ID cards.

Typically, laser markable security documents are prepared by laminating a laser markable foil or laminate, optionally together with other foils or laminates, onto one or both sides of a core support.

Such laser markable security documents and their preparation have been disclosed in for example WO2015/091782 (Agfa Gevaert).

The laser markable laminate may be prepared by providing a laser markable composition according to the present invention on a support. The support is described above and is preferably a transparent polymeric support.

The laser markable laminate may comprise more than one laser markable layers or may comprise additional layers such an ink receiving layer, a UV absorbing layer, intermediate layers or adhesion promoting layers.

The laser markable laminate is typically laminated on one or both sides of a core support using elevated temperatures and pressures.

Preferred core supports are disclosed in WO2014/057018 (Agfa Gevaert), paragraphs [0112] to [0015].

The lamination temperature depends on the type of core support used. For a polyester core, lamination temperatures are preferably between 120 and 140°C, while they are preferably above 150°C - 160°C for a polycarbonate core.

The capsules of the laser markable layer have to withstand the elevated temperatures and pressures to avoid colour formation as a result of the lamination step, resulting in a too high background colour.

### Lasermarking

Laser marking is carried out with an infrared laser.

The infrared laser may be a continuous wave or a pulsed laser.

For example a CO₂ laser, a continuous wave, high power infrared laser having emission wavelength of typically 10600 nm (10.6 micrometer) may be used.

CO₂ lasers are widely available and cheap. A disadvantage however of such a CO₂ laser is the rather long emission wavelength, limiting the resolution of the laser marked information.

To produce high resolution laser marked data, it is preferred to use a near infrared (NIR) laser having an emission wavelength between 750 and 2500, preferably between 800 and 1500 nm in the laser marking step.

A particularly preferred NIR laser is an optical pumped semiconductor laser. Optically pumped semiconductor lasers have the advantage of unique wavelength flexibility, different from any other solid-state based laser. The output wavelength can be set anywhere between about 920 nm and about 1150 nm. This allows a perfect match between the laser emission wavelength and the absorption maximum of an optothermal converting agent present in the laser markable layer.

A preferred pulsed laser is a solid state Q-switched laser. Q-switching is a technique by which a laser can be made to produce a pulsed output beam. The technique allows the production of light pulses with extremely high peak power, much higher than would be produced by the same laser if it were operating in a continuous wave (constant output) mode, Q-switching leads to much lower pulse repetition rates, much higher pulse energies, and much longer pulse durations.

Laser marking may also be carried out using a so-called Spatial Light Modulator (SLM) as disclosed in WO2012/044400 (Vardex Laser Solutions).

### EXAMPLES

### Materials

All materials used in the following examples were readily available from standard sources such as ALDRICH CHEMICAL Co. (Belgium) and ACROS (Belgium) unless otherwise specified. The water used was deionized water.

**Takenate D110N** is an aromatic triisocyanate commercially available from Mitsui.

**Mowiol 4 88** is a polyvinyl alcohol commercially available from Hoechst.

**Olfine E1010** is a wetting agent commercially available from Shin-Etsu Chemical Company.

**Arlo** is a 15 wt% aqueous solution of Marlon A365, commercially available from Brenntag.

**Proxel Ultra** 5 is a biocide commercially available from Avecia.

**Ralox 46** is a sterically hindered phenolix antioxidant from Raschig.

**Tinuvin 928** is an UV absorber commercially available from BASF.

**DISFLAMOLL TKP** is a low volatility halogen free phosphate plasticer from Lanxess.

**4,4'-Thiobis(6-tert-butyl-m-cresol)** is commercially available from TCI Europe.

**Zinc 3,5-bis(alpha methylbenzyl) salicylate** (CASRN53770-52-8) is a developing agent, commercially available from Sanko Europe).

**MOW** is an aqueous solution of bearing 15 wt% Mowiol 4 88 and 2 wt% Proxel Ultra 5.

**MEK** is an abbreviation used for methylethylketone.

**1064IR** is an infrared dye with the following structure: 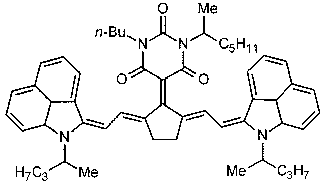 1064IR can be prepared according to the synthetic methods reported in EP-A 2463109 (Agfa), paragraphs [0150] to [0159].

**WINCON 205** is a black leuco dye commercially available from Connect Chemicals.

**PERGASCRIPT Black IR** is a black leuco dye commercially available from BASF.

**PERGASCRIPT Black 2C** is a black leuco dye commercially available from BASF.

**Orange DCF** is an orange leuco dye commercially available from Connect Chemicals.

**MITSUI GN-169** is a cyan leuco dye commercially available from Mitsui.

**MITSUI GN-2** is a cyan leuco dye commercially available from Mitsui.

**HYDRAZ-01** (reference example) is a hydrazide having the following structure available from ALDRICH.

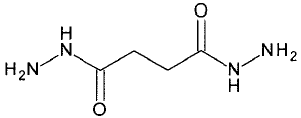

**HYDRAZ-02** is a hydrazide having the following structure available from TCI Europe.

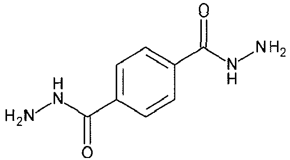

**HYDRAZ-03** is a hydrazide having the following structure available from TOKYO KASEI KOGYO

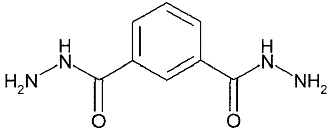

**HYDRAZ-04** (reference example) is a hydrazide having the following structure available from ABCR GmbH.

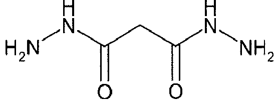

### Measurements

### Solvent resistance

The leuco dye dispersions described in Example 1 were evaluated for solvent resistance as follows:

0.2 g of the leuco dye dispersions was added to 2.4 grams of water, 0.2 grams of butyl glycol and 0.4 grams of DEV DISP. The mixtures were visually evaluated after 1 hour, 3.5 hours and 24 hours (OK = no visual colour change; NOK = visual colour change).

The visual results were confirmed by SEM analysis of the samples. When a colour change appeared, the capsules had lost their spherical shape.

### Example 1

### Preparation of the hydrazide compounds HYDRAZ-05 and 06.

HYDRAZ-05 was prepared as follows:
1 g of trimethyl 1,3,5-benzenetricarboxylate was added to 5 g of methanol and heated to 70°C, after which hydrazine hydrate (1.2 g) was added.

The solution was stirred overnight at 70°C, forming a white precipitate. The reaction mixture was cooled down and filtered. The yield was 75 %

HYDRAZ-06 was prepared as follows:
Trimethyl citrate (2 g, 8.5 mmmol) was added to 5 ml of methanol. An excess of hydrazine hydrate (34.15 mmol, 1.71 g) was added.

The mixture was then heated for 16 hours at 65°, forming a white precipitate. The reaction mixture was cooled down and filtered. The yield was 88 %.

### Preparation of the comparative leuco dye dispersion LD DISP-01

2.1 g Tinuvin 928 (commercially available from BASF), 5.47 g WINCON 205, 1.22 g Pergascript black IR, 3.04 g Pergascript Black 2C, 4.87 g Orange DCF, 4.87 g MITSUI GN-169 and 2.43 g MITSUI GN-2 were added to 32 g ethyl acetate. 23.1 g TAKENATE D110N was added to the mixture. The mixture was heated to the boiling point and stirred until all components were dissolved. The mixture was brought to 25 °C. 0.25 g 1064IR dissolved in 2 mL methylene chloride was added to the mixture. In a separate flask, 3 drops of OLFINE E1010 were added to 77 g MOWIOL 488 and 50 mL water. The ethyl acetate-based solution was added to the aqueous solution. The mixture was cooled in an ice bath and emulsified using a T25 digital Ultra-Turrax® with an 18N rotor commercially available from IKA at 15000 rpm during 5 minutes.

In an evaporation step, ethyl acetate was removed under reduced pressure. To compensate for the removal of 10 mL of water in the evaporation step, the same amount of water was added to the mixture after evaporation. The mixture was stirred for 16 hours at 65 °C and afterwards cooled to 25 °C. Large particles were removed by filtering the mixture using a cloth filter with 60 µm pores. The obtained dispersion had a solid content of 25 wt%.

### Preparation of the inventive leuco dye dispersion LD DISP-03, LD DISP-04 and LD DISP-06 and reference dispersions LD DISP-02, LD DISP-05 and LD DISP-07

LD DISP-02 to LD DISP-05 were prepared as described above for LD DISP-02 but wherein respectively HYDRAZ-01 to HYDRAZ-06, all dissolved in water, were added to the reaction mixture after the evaporation step. The reaction mixture contained an equimolar amount of hydrazide and isocyanate groups.

### Preparation of the dispersion containing the developing agent DEV DISP

In Pot A, 55 g of Arlo, 4.4 g Proxel Ultra 5 and 366.674 MOW were added to 524.601 g water. The mixture was stirred for 5 minutes at 50°C in order to dissolve all components.

In Pot B, 10.725 g 4,4'-Thiobis(6-tert-butyl-m-cresol) (commercially available from TCI Europe), 10.725 g Ralox 46, 33 g Tinuvin 928, 8.25 g DISFLAMOLL TKP, 4.125 g Ethyl Maleate (commercially available from TCI Europe) and 181.5 g Zinc 3,5-bis(alpha methylbenzyl) salicylate were added to 495 g ethyl acetate. The mixture was stirred for 30 minutes at 50°C in order to dissolve all components.

While Pot A was stirred with a HOMO-REX high speed homogenizing mixer, the solution in Pot B was added to Pot A. The mixture was further stirred during 5 minutes with the HOMO-REX mixer. Ethyl acetate was removed from the mixture under reduced pressure.

### Solvent Resistance

The solvent resistance of the leuco dye dispersions LD-DISP 01 to 05 was evaluated as described above. The results are shown in Table 2.

**Table 2**

| | **Cross-linker** | **1 hour** | **4 hours** | **24 hours** |
|---|---|---|---|---|
| LD-DISP 01 | No cross-linker | NOK | NOK | NOK |
| LD-DISP 02 | 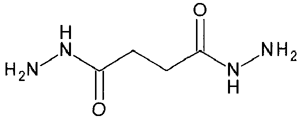 | OK | NOK | NOK |
| LD-DISP 03 | 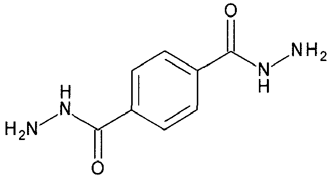 | OK | OK | OK |
| LD-DISP 04 | 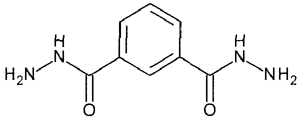 | OK | OK | OK |
| LD-DISP 05 | 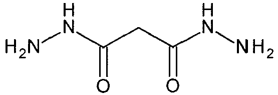 | OK | OK | NOK |
| LD-DISP 06 | 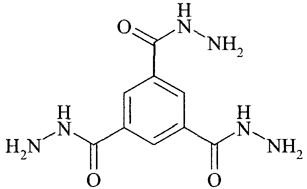 | OK | OK | OK |
| LD-DISP 07 | 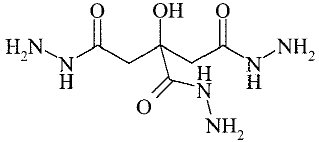 | OK | OK | NOK |

The visual results were confirmed by SEM analysis of the samples. When a colour change appeared, the capsules had lost their spherical shape.

The results clearly illustrate that dispersion comprising the inventive capsules have an improved solvent resistance.

The results also indicate that capsules prepared with polyhydrazides comprising an arylene group, preferably a phenylene group, had a better solvent resistance compared to those prepared with polyhydrazides, which do not comprise such a phenylene group.

## Claims

1. A composition comprising a capsule including a core and a shell, wherein the capsule is prepared via interfacial polymerization of a polyisocyanate and a compound including an active hydrogen, characterized that the compound including an active hydrogen is a polyhydrazide according to Formula I, 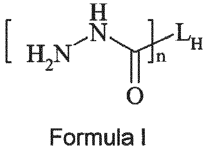 wherein
L_{H} is a substituted or unsubstituted arylene group, and
n is an integer ranging from 2 to 4.

2. The composition according to claim 1 wherein the arylene group is a phenylene group.

3. The composition according to claim 1 or 2 wherein the polyisocyanate is a trifunctional polyisocyanate.

4. The composition according to any of the preceding claims wherein the polyisocyanate is an aromatic polyisocyanate.

5. The composition according to any of the preceding claims comprising a leuco dye in the core of the capsule.

6. The composition according to any of the preceding claims further comprising an optothermal converting agent and a developing agent.

7. The composition according to claim 6 wherein the optothermal converting agent is an infrared absorbing dye.

8. A laser markable article comprising a composition as defined in any of the claims 5 to 7 provided on a support.

9. The laser markable article according to claim 8 wherein the laser markable composition is provided on a support by intaglio printing, screen printing, flexographic printing, offset printing, inkjet printing, or rotogravure printing.

10. The laser markable article according to claim 8 or 9 wherein the article is selected from the group consisting of a packaging, a foil, a laminate, a security document, a label, a decorative object and an RFID tag.

11. A method of preparing a laser marked article comprising the step of exposing a laser markable article as defined in any of the claims 8 to 10 with an infrared laser thereby forming a laser marked image.

12. The method according to claim 11 wherein the laser marked image is selected from the group consisting of a barcode, a QR code, alphanumerical data, pictures, and logos.

## Patentansprüche

1. Eine Zusammensetzung, umfassend eine Kapsel, enthaltend einen Kern und eine Hülle, wobei die Kapsel durch Grenzflächenpolymerisation eines Polyisocyanats und einer einen aktiven Wasserstoff enthaltenden Verbindung hergestellt wird, **dadurch gekennzeichnet, dass** die einen aktiven Wasserstoff enthaltende Verbindung ein Polyhydrazid gemäß Formel I ist: 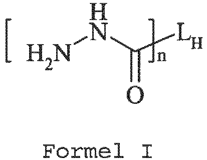 in der
L_{H} eine substituierte oder nicht-substituierte Arylengruppe bedeutet, und
n eine ganze Zahl zwischen 2 und 4 bedeutet.

2. Die Zusammensetzung nach Anspruch 1, wobei die Arylengruppe eine Phenylengruppe ist.

3. Die Zusammensetzung nach Anspruch 1 oder 2, wobei das Polyisocyanat ein trifunktionelles Polyisocyanat ist.

4. Die Zusammensetzung nach einem der vorstehenden Ansprüche, wobei das Polyisocyanat ein aromatisches Polyisocyanat ist.

5. Die Zusammensetzung nach einem der vorstehenden Ansprüche, die einen Leukofarbstoff im Kern der Kapsel enthält.

6. Die Zusammensetzung nach einem der vorstehenden Ansprüche, die ferner ein optothermisches Umwandlungsmittel und einen Entwickler enthält.

7. Die Zusammensetzung nach Anspruch 6, wobei das optothermische Umwandlungsmittel ein Infrarotlicht absorbierender Farbstoff ist.

8. Ein lasermarkierbarer Artikel, enthaltend eine wie nach einem der Ansprüche 5 bis 7 definierte, auf einen Träger angebrachte Zusammensetzung.

9. Der lasermarkierbare Artikel nach Anspruch 8, wobei die lasermarkierbare Zusammensetzung durch Tiefdruck, Siebdruck, Flexodruck, Offsetdruck, Tintenstrahldruck oder Rotationstiefdruck auf einen Träger aufgetragen wird.

10. Der lasermarkierbare Artikel nach Anspruch 8 oder 9, wobei der Artikel aus der Gruppe bestehend aus einer Verpackung, einer Folie, einem Laminat, einem Sicherheitsdokument, einem Etikett, einem dekorativen Gegenstand und einem RFID-Tag ausgewählt wird.

11. Ein Verfahren zur Herstellung eines lasermarkierten Artikels, umfassend den Schritt, in dem ein wie nach einem der Ansprüche 8 bis 10 definierter lasermarkierbarer Artikel mit einem Infrarotlaser belichtet wird und dabei ein lasermarkiertes Bild erzeugt wird.

12. Das Verfahren nach Anspruch 11, wobei das lasermarkierte Bild aus der Gruppe bestehend aus einem Strichcode, einem QR-Code, alphanumerischen Daten, Abbildungen und Logos ausgewählt wird.

## Revendications

1. Composition comprenant une capsule contenant un cœur et une enveloppe, **caractérisée en ce que** la capsule est préparée par polymérisation interfaciale d'un polyisocyanate et d'un composé contenant un hydrogène actif, **caractérisée en ce que** le composé contenant un hydrogène actif est un polyhydrazide répondant à la Formule I: 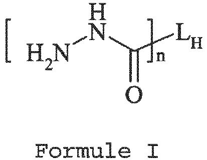 où
L_{H} représente un groupe arylène substitué ou non substitué, et
n représente un nombre entier compris entre 2 et 4.

2. Composition selon la revendication 1, **caractérisée en ce que** le groupe arylène est un groupe phénylène.

3. Composition selon la revendication 1 ou 2, **caractérisée en ce que** le polyisocyanate est un polyisocyanate trifonctionnel.

4. Composition selon l'une quelconque des revendications précédentes, **caractérisée en ce que** le polyisocyanate est un polyisocyanate aromatique.

5. Composition selon l'une quelconque des revendications précédentes, contenant un colorant leuco dans le cœur de la capsule.

6. Composition selon l'une quelconque des revendications précédentes, contenant en outre un agent de conversion optothermique et un révélateur.

7. Composition selon la revendication 6, **caractérisée en ce que** l'agent de conversion optothermique est un colorant absorbant les rayons infrarouges.

8. Article marquable au laser contenant une composition telle que définie selon l'une quelconque des revendications 5 à 7 et appliquée sur un support.

9. Article marquable au laser selon la revendication 8, **caractérisée en ce que** la composition marquable au laser est appliquée sur un support par impression en héliogravure, impression sérigraphique, impression flexographique, impression offset, impression à jet d'encre ou impression en héliogravure rotative.

10. Article marquable au laser selon la revendication 8 ou 9, **caractérisée en ce que** l'article est choisi parmi le groupe composé d'un emballage, d'une feuille, d'un stratifié, d'un document de sécurité, d'une étiquette, d'un objet décoratif et d'une étiquette RFID.

11. Procédé pour la production d'un article marqué au laser, comprenant l'étape consistant à exposer un article marquable au laser tel que défini selon l'une quelconque des revendications 8 à 10 à l'aide d'un laser infrarouge et générer ainsi une image marquée au laser.

12. Procédé selon la revendication 11, **caractérisé en ce que** l'image marquée au laser est choisie parmi le groupe composé d'un code à barres, un code QR, de données alphanumériques, de photos et de logos.
